# EUROPEAN PATENT APPLICATION

(11) **EP 4 403 596 A1**
(43) Date of publication of application: **24.07.2024**
(21) Application number: 22869747.0
(22) Date of filing: 18.08.2022
(51) Int. Cl.: C08G 75/045, C09J 4/02, C09J 11/04, C09J 11/06, C09J 11/08

(54) **RESIN COMPOSITION, ADHESIVE FOR ELECTRONIC COMPONENT, CURED PRODUCTS OF THESE, AND ELECTRONIC COMPONENT**

(30) Priority: 15.09.2021 JP 2021149897
(71) Applicant: Namics Corporation, Niigata-shi, Niigata 950-3131 (JP)
(72) Inventor: UECHI Hiroki, Niigata-shi, Niigata 950-3131 (JP); UESUGI Yohei, Niigata-shi, Niigata 950-3131 (JP)
(74) Representative: Mathys & Squire
(86) International application number: PCT/JP2022/031255
(87) International publication number: WO 2023/042600

(57) **Abstract**

Provided is a resin composition excellent in workability and stability. The resin composition contains: a methacrylate compound (A); a polyfunctional thiol compound (C); a radical polymerization initiator (D); and an anionic polymerization initiator (E), the resin composition does not contain or contains a polyfunctional acrylate compound (B), and a ratio of a total number of methacryloyl groups in the methacrylate compound (A) to a total number of acryloyl groups in the polyfunctional acrylate compound (B) is (A):(B) = 10:0 to 2:8.

## Description

### TECHNICAL FIELD

The present invention relates to a resin composition, an adhesive for electronic component, cured products thereof, and the electronic component.

### BACKGROUND ART

In a step of applying a UV and/or thermosetting adhesive for electronic component, an air dispenser is mainly used, but problems are to reduce a minute region, minute application, and production takt time. Hereinafter, the UV and/or thermosetting adhesive for electronic component may be collectively and simply referred to as the "adhesive for electronic component".

In recent years, a technique for applying an adhesive for electronic component by a jet dispenser has been studied to solve the above-described problem. For example, as such an adhesive for electronic component, a resin composition that can be applied by jet dispensing using acrylate and thiol is disclosed (see PATENT LITERATURE 1).

### CITATION LIST

### PATENT LITERATURE

PATENT LITERATURE 1: JP-A-2018-203910

### SUMMARY OF INVENTION

### PROBLEMS TO BE SOLVED BY INVENTION

However, since a (meth)acrylate-radical UV and/or thermosetting adhesive as described in PATENT LITERATURE 1 reacts quickly, there has been newly found a problem that the adhesive is gelled in the jet dispenser due to impact, shearing, heat generation, or the like at the time of application by the jet dispenser.

For example, PATENT LITERATURE 1 discloses the resin composition that can be applied by jet dispensing using acrylate and thiol as described above, but does not disclose a case that has been actually studied.

Therefore, there is a strong demand for development of a resin composition that can be actually applied by jet dispensing, particularly a resin composition that is excellent in continuous discharge performance by jet dispensing by effectively suppressing gelation in the jet dispenser and is also excellent in curability after application. Hereinafter, the continuous discharge performance by jet dispensing may be referred to as "jet dispensing property".

The present invention has been made in view of such problems of the prior art as described above. The present invention provides the resin composition having excellent jet dispensing property and curability, the adhesive for electronic component, the cured products thereof, and the electronic component.

### SOLUTION TO PROBLEMS

According to the present invention, there are provided the resin composition, the adhesive for electronic component, the cured products thereof, and the electronic component to be described below.

[1] A resin composition containing: a methacrylate compound (A); a polyfunctional thiol compound (C); a radical polymerization initiator (D); and an anionic polymerization initiator (E), in which the resin composition does not contain or contains a polyfunctional acrylate compound (B), and a ratio of a total number of methacryloyl groups in the methacrylate compound (A) to a total number of acryloyl groups in the polyfunctional acrylate compound (B) is (A):(B) = 10:0 to 2:8.
[2] The resin composition according to [1], further containing a polymerization inhibitor (F).
[3] The resin composition according to [1] or [2], in which a ratio of a total number of (meth)acryloyl groups in the methacrylate compound (A) and the polyfunctional acrylate compound (B) to a total number of thiol groups in the polyfunctional thiol compound (C) is 0.8 to 1.2.
[4] The resin composition according to any one of [1] to [3], further comprising a filler (G).
[5] The resin composition according to any one of [1] to [4], further comprising a black pigment (H).
[6] An adhesive for electronic component using the resin composition according to any one of [1] to [5].
[7] A cured product containing the resin composition according to any one of [1] to [5] or the adhesive for electronic component according to [6].
[8] An electronic component using the resin composition according to any one of [1] to [5] or the adhesive for electronic component according to [6].
[9] An electronic component containing the cured product according to [7].

### EFFECTS OF INVENTION

Since the resin composition and the adhesive for electronic component of the present invention contain the methacrylate compound as a component (A), even those containing a thiol compound, which has a high reaction rate, are excellent in workability and stability. The resin composition and the adhesive for electronic component of the present invention may or may not contain the polyfunctional acrylate compound as the component (B), and an acrylate compound generally used in a conventional (meth)acrylate-radical-based resin composition is an optional component. When the resin composition and the adhesive for electronic component of the present invention contain the methacrylate compound as an essential component as described above, continuous discharge by jet dispensing can be performed. In particular, by setting a ratio of the total number of methacryloyl groups in the methacrylate compound as the component (A) to the total number of acryloyl groups in the polyfunctional acrylate compound as the component (B) is (A):(B) = 10:0 to 2:8, extremely excellent jet dispensing property can be realized.

In addition, the resin composition and the adhesive for electronic component of the present invention is also applicable to an adhesive that is only thermally cured without being irradiated with UV The resin composition of the present invention is not limited to use for the electronic component.

Further, the resin composition and the adhesive for electronic component of the present invention are used for bonding members constituting a camera module to each other, and are suitably used as an adhesive for temporary fixing (for example, an active alignment step) and fixing mainly using curing by UV irradiation. Furthermore, they are also applicable to an adhesive that is only thermally cured without being irradiated with UV

### BRIEF DESCRIPTION OF DRAWINGS

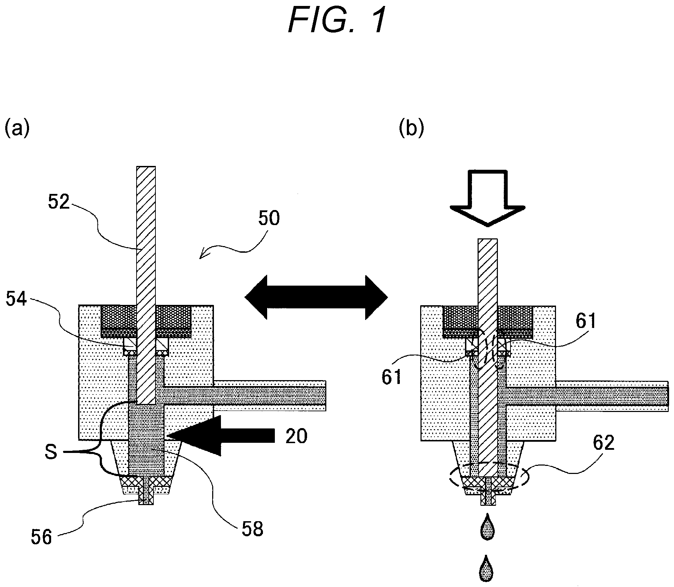

Fig. 1 is a schematic cross-sectional view of an example of a jet dispensing device (a jet dispenser).

### DESCRIPTION OF EMBODIMENTS

Hereinafter, embodiments of the present invention will be described, but the present invention is not limited to the following embodiments. Therefore, it should be understood that modifications, improvements, and the like appropriately made to the following embodiments based on ordinary knowledge of those skilled in the art without departing from the gist of the present invention also fall within the scope of the present invention.

### (1) Resin composition:

One embodiment of a resin composition of the present invention is a resin composition containing: a methacrylate compound (A); a polyfunctional thiol compound (C); a radical polymerization initiator (D); and an anionic polymerization initiator (E). Then, the resin composition of the present embodiment may not contain a polyfunctional acrylate compound (B), or may contain the polyfunctional acrylate compound (B). Hereinafter, the methacrylate compound (A) may be referred to as a component (A). Similarly, the polyfunctional acrylate compound (B) may be referred to as a component (B), the polyfunctional thiol compound (C) may be referred to as a component (C), the radical polymerization initiator (D) may be referred to as a component (D), and the anionic polymerization initiator (E) may be referred to as a component (E).

Since the resin composition of the present embodiment contains the methacrylate compound (A), it is excellent in workability and stability even when it contains the polyfunctional thiol compound (C) which has a high reaction rate. Further, in the resin composition of the present embodiment, an acrylate compound generally used in a conventional (meth)acrylate-radical-based resin composition is an optional component. As described above, when the resin composition of the present embodiment contains the methacrylate compound (A) as an essential component, continuous discharge by jet dispensing can be performed.

The resin composition of the present embodiment is configured such that a ratio of a total number of methacryloyl groups in the methacrylate compound as the component (A) to a total number of acryloyl groups in the polyfunctional acrylate compound as the component (B) is (A):(B) = 10:0 to 2:8. A compounding ratio of the component (A) and the component (B) is managed by a total number of (meth)acryloyl groups in both components, and an extremely excellent jet dispensing property can be realized by setting the compounding ratio within the above numerical range. Considering a continuous discharge property of jet dispensing, (A):(B) is desirably 10:0 to 5:5. On the other hand, in one embodiment, when high reactivity by UV and/or heat is required, it is desirable that an amount of the acrylate compound is large, and thus (A):(B) is desirably 5:5 to 2:8.

The resin composition of the present embodiment is used for bonding members constituting a camera module to each other, and is suitably used as an adhesive for temporary fixing (for example, an active alignment step) and fixing mainly using UV Furthermore, they are also applicable to an adhesive that is only thermally cured without being irradiated with UV When the resin composition is applied by jet dispensing, since impact or heat is applied to the adhesive supplied to a nozzle portion, if the resin composition used as the adhesive has good reactivity, the adhesive is gelled and cannot be discharged. The resin composition of the present embodiment has improved jet dispensing property by controlling the reactivity.

The resin composition of the present embodiment is also applicable to the adhesive that is only thermally cured without being irradiated with UV

Note that the resin composition of the present embodiment may contain other components such as a polymerization inhibitor (F), a filler (G), and a black pigment (H) in addition to the components (A), (B), (C), (D), and (E) described above. Hereinafter, the above-described components may be appropriately referred to as a component (F) to a component (H).

Fig. 1 illustrates a schematic cross-sectional view of an example of a jet dispensing device (a jet dispenser 50). The jet dispenser 50 includes a needle 52 capable of reciprocating motion like a piston, a seal 54 (a sealing member) for preventing a resin composition 20 from leaking to an outside even by the reciprocating motion of the needle 52, and a nozzle 56 for jet dispensing the resin composition 20.

As illustrated in Fig. 1(a), by pushing out a syringe (not illustrated) filled with the resin composition with a pressure of air and reciprocating the needle 52 with a length of stroke S, the resin composition 20 is supplied to a chamber 58 in the jet dispenser 50 and jet dispensed from the nozzle 56. Note that the nozzle 56 has an inner diameter of 50 to 200 µm. As a result, as illustrated in Fig. 1(b), the jet-dispensed resin composition 20 is supplied from the nozzle 56 to a predetermined object. The resin composition of the present embodiment has excellent jet dispensing property by effectively suppressing gelation in the chamber 58 in the jet dispenser 50, and also has excellent curability after jet dispensing. In particular, even when heat generation or the like occurs due to impact or shearing on the resin composition 20 accompanying the reciprocating motion of the needle 52, the gelation of the resin composition 20 in the chamber 58 in the jet dispenser 50 can be extremely effectively suppressed. A range indicated by a reference numeral 61 in Fig. 1(b) is a sliding portion 61 in which the needle 52 slides against the seal 54 along with the reciprocating motion of the needle 52, and stress is applied to the resin composition 20 in such a sliding portion 61. In addition, a range indicated by a reference numeral 62 in Fig. 1(b) is a collision portion 62 in which a tip of the needle 52 collides with the nozzle 56 along with the reciprocating motion of the needle 52, and stress is applied to the resin composition 20 in such a collision portion 62.

### (Component (A))

The component (A) is a methacrylate compound. The component (A) is not particularly limited as long as it has a methacryloyl group. For example, the number of functional groups (that is, the number of methacryloyl groups) in the methacrylate compound as the component (A) is not particularly limited.

The methacrylate compound (A) has a functional group equivalent of preferably 100 or more and 500 or less, more preferably 100 or more and 400 or less, and still more preferably 100 or more and 250 or less from the viewpoint of reactivity, dispersibility, and workability. In addition, the number of functional groups in one molecule is preferably 1 to 6, more preferably 1 to 4, and still more preferably 2 or 3. In one embodiment, it is preferable that the component (A) contains a benzene ring in the molecule in order to make physical properties of the resin composition after curing high heat resistance and high reliability. In another embodiment, it is preferable that the component (A) does not contain a benzene ring in order to make physical properties of the resin composition after curing low elasticity.

Specific examples of the methacrylate compound (A) include monomers such as 2-hydroxypropyl methacrylate, 2-hydroxy-1, 3-dimethacryloxypropane, 4-hydroxybutyl methacrylate, cyclohexane-1,4-dimethanol monomethacrylate, tetrahydrofurfuryl methacrylate, phenoxyethyl methacrylate, phenyl polyethoxy methacrylate, 2-hydroxy-3-phenyloxypropyl methacrylate, o-phenylphenol monoethoxy methacrylate, o-phenylphenol polyethoxy methacrylate, p-cumylphenoxyethyl methacrylate, isobonyl methacrylate, tribromophenyloxyethyl methacrylate, dicyclopentanyl methacrylate, dicyclopentenyl methacrylate, dicyclopentenyloxyethyl methacrylate, 1,4-butanediol dimethacrylate, 1,6-hexanediol dimethacrylate, 1,9-nonanediol dimethacrylate, tricyclodecane dimethanol methacrylate, bisphenol A polyethoxy dimethacrylate, bisphenol A polypropoxy dimethacrylate, bisphenol F polyethoxy dimethacrylate, ethylene glycol dimethacrylate, polyethylene glycol dimethacrylate, tris(methacryloxyethyl) isocyanurate, pentaerythritol tetramethacrylate, dipentaerythritol hexamethacrylate, dipentaerythritol pentamethacrylate, tripentaerythritol hexamethacrylate, tripentaerythritol pentamethacrylate, trimethylolpropane trimethacrylate, trimethylolpropane polyethoxy trimethacrylate, ditrimethylolpropane tetramethacrylate, and neopentyl glycol dimethacrylate.

### (Component (B))

The component (B) is a polyfunctional acrylate compound. The resin composition of the present embodiment may further contain the acrylate compound as the component (B) in addition to the methacrylate compound as the component (A).

The acrylate compound (B) is a polyfunctional acrylate compound having two or more acryloyl groups. The polyfunctional acrylate compound (B) is more preferably bifunctional from the viewpoint of jet dispensing property. If it is trifunctional or higher, the jet dispensing property may be disadvantageous.

The acrylate compound (B) has a functional group equivalent of preferably 100 or more and 500 or less, more preferably 100 or more and 400 or less, and still more preferably 100 or more and 250 or less from the viewpoint of the reactivity, the dispersibility, and the workability. In addition, the number of functional groups is preferably 1 to 6, more preferably 1 to 4, and still more preferably 2 or 3. In one embodiment, it is preferable that the component (B) contains a benzene ring in the molecule in order to make physical properties of the resin composition after curing high heat resistance and high reliability. Further, in another embodiment, it is preferable that the component (B) does not contain a benzene ring in order to make physical properties of the resin composition after curing low elasticity.

Specific examples of the polyfunctional acrylate compound (B) include monomers such as N-acryloyloxyethylhexahydrophthalimide, acryloylmorpholine, 2-hydroxypropyl acrylate, 4-hydroxybutyl acrylate, cyclohexane-1,4-dimethanol monoacrylate, tetrahydrofurfuryl acrylate, phenoxyethyl acrylate, phenyl polyethoxy acrylate, 2-hydroxy-3-phenyloxypropyl acrylate, o-phenylphenol monoethoxy acrylate, o-phenylphenol polyethoxy acrylate, p-cumylphenoxyethyl acrylate, isobonyl acrylate, tribromophenyloxyethyl acrylate, dicyclopentanyl acrylate, dicyclopentenyl acrylate, dicyclopentenyloxyethyl acrylate, 1,4-butanediol diacrylate, 1,6-hexanediol diacrylate, 1,9-nonanediol diacrylate, tricyclodecane dimethanol acrylate, bisphenol A polyethoxydiacrylate, bisphenol A polypropoxy diacrylate, bisphenol F polyethoxy diacrylate, ethylene glycol diacrylate, polyethylene glycol diacrylate, tris(acryloxyethyl) isocyanurate, pentaerythritol tetraacrylate, dipentaerythritol hexaacrylate, dipentaerythritol pentaacrylate, tripentaerythritol hexaacrylate, tripentaerythritol pentaacrylate, trimethylolpropane triacrylate, trimethylolpropane polyethoxy triacrylate, ditrimethylolpropane tetraacrylate, ester diacrylate of neopentyl glycol and hydroxypivalic acid, and diacrylate of ε-caprolactone adduct of ester of neopentyl glycol and hydroxypivalic acid. Preferable examples thereof include N-acryloyloxyethylhexahydrophthalimide, phenoxyethyl acrylate, and dicyclopentenyloxyethyl acrylate.

In the resin composition of the present embodiment, the ratio of the total number of methacryloyl groups in the methacrylate compound (A) to the total number of acryloyl groups in the polyfunctional acrylate compound (B) is (A):(B) = 10:0 to 2:8. By setting the numerical range as described above, the extremely excellent jet dispensing property can be realized. The ratio of the total number of methacryloyl groups in the methacrylate compound (A) to the total number of acryloyl groups in the polyfunctional acrylate compound (B) is preferably (A)/(B) = 0.8 to 1.2. With such a configuration, it is possible to achieve both the jet dispensing property and thermosetting properties.

Further, in the resin composition of the present embodiment, a ratio of a total number of (meth)acryloyl groups in the methacrylate compound (A) and the polyfunctional acrylate compound (B) to a total number of thiol groups in the polyfunctional thiol compound (C) is preferably 0.8 to 1.2. By setting the total number of functional groups of each component to the ratio as described above, the reactivity of the resin composition can be improved. Here, the total number of (meth)acryloyl groups in the methacrylate compound (A) and the polyfunctional acrylate compound (B) means a sum of the total number of methacryloyl groups in the methacrylate compound (A) and the total number of acryloyl groups in the polyfunctional acrylate compound (B).

Here, the total number of methacryloyl groups in the methacrylate compound (A), the total number of acryloyl groups in the polyfunctional acrylate compound (B), and the total number of thiol groups in the polyfunctional thiol compound (C) will be described. In the case of a compound having an acryloyl group and a methacryloyl group in the molecule, the methacryloyl group is counted as the total number of methacryloyl groups in the methacrylate compound (A), and the acryloyl group is counted as the total number of acryloyl groups in the polyfunctional acrylate compound (B). In the case of a silane coupling agent having a thiol group or a (meth)acryloyl group, it is not counted as the total number of the component (A), the component (B), and the component (C).

Further, the total number of methacryloyl groups in the methacrylate compound (A), the total number of acryloyl groups in the polyfunctional acrylate compound (B), and the total number of thiol groups in the polyfunctional thiol compound (C) can be determined, for example, by an analysis method such as NMR, gas chromatography, or liquid phase chromatography.

Further, a ratio of the total number of methacryloyl groups in the methacrylate compound (A) to the total number of thiol groups in the polyfunctional thiol compound (C) may be 0.1 to 1.2. With such a configuration, the reactivity of the resin composition can be improved as in the case described above.

### (Component (C))

The component (C) is a polyfunctional thiol compound. The polyfunctional thiol compound as the component (C) imparts thermosetting properties to the resin composition of the present embodiment, and further has an effect of improving UV curability. The component (C) is not particularly limited as long as it has two or more functional groups. However, from the viewpoint of moisture resistance, the component (C) is preferably a non-hydrolyzable thiol containing no ester bond in the molecule in order to suppress hydrolysis.

From the viewpoint of the dispersibility and the workability, the polyfunctional thiol compound (C) particularly preferably has a molecular weight of 500 or less and is in a liquid state at normal temperature.

Examples of the component (C) include a glycoluril compound represented by the following general formula (1).

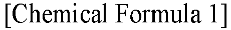

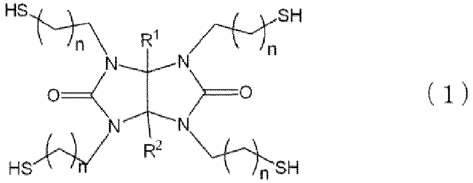

In the general formula (1), R¹ and R² are each independently hydrogen, an alkyl group having 1 to 10 carbon atoms, or a phenyl group. n is an integer of 0 to 10. Further, the component (C) may be a compound represented by the following chemical formula (2) or chemical formula (3).

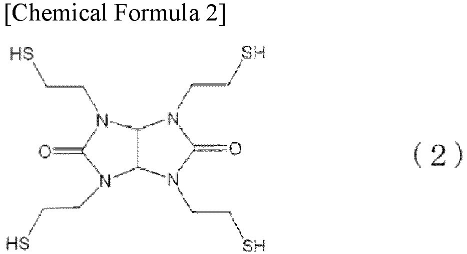

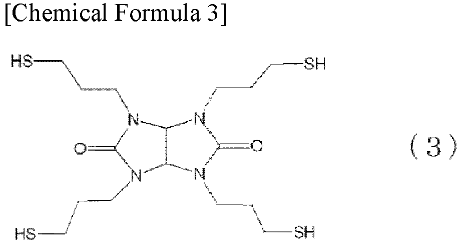

The compound represented by Chemical Formula (2) or Chemical Formula (3) is a more preferable compound as the component (C).

Further, examples of a polyfunctional thiol resin having no ester bond in the molecule include a polyfunctional thiol resin represented by the general formula (4).

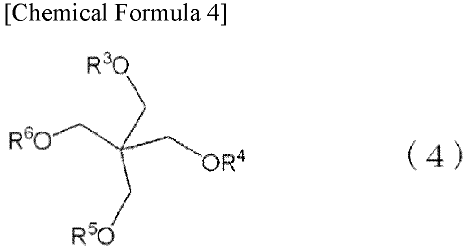

In the general formula (4), R³, R⁴, R⁵, and R⁶ are each independently hydrogen or CₙH₂ₙSH (n is 2 to 6). Furthermore, at least one of R³, R⁴, R⁵, and R⁶ is CₙH₂ₙSH (n is 2 to 6). Two to four of R³, R⁴, R⁵, and R⁶ are preferably CₙH₂ₙSH (n is 2 to 6), and three or four of R³, R⁴, R⁵, and R⁶ are more preferably CₙH₂ₙSH (n is 2 to 6). Further, n of the polyfunctional thiol compound as the component (C) represented by the general formula (4) is preferably 2 to 4 from the viewpoint of curability. Furthermore, the thiol compound more preferably has a mercaptopropyl group in which n is 3 from the viewpoint of a balance between the physical properties of the cured product and the curing rate. Since the component (C) represented by the general formula (4) itself has a sufficiently flexible skeleton, it is effective when it is desired to reduce an elastic modulus of the cured product. Since the elastic modulus of the cured product can be controlled by adding the component (C) represented by the general formula (4), an adhesive strength (in particular, a peel strength) after curing can be increased.

Examples of commercially available products of the component (C) include thiol glycoluril derivatives (product name: TS-G (equivalent to Chemical Formula (2), thiol equivalent: 100 g/eq), C3TS-G (equivalent to Chemical Formula (3), thiol equivalent: 114 g/eq)) manufactured by Shikoku Chemicals Corporation, and a thiol compound (product name: Multhiol Y-3 (a main component in the general formula (4) corresponds to a trifunctional thiol)) manufactured by SC Organic Chemical Co., Ltd. As the component (C), a single component may be used, or two or more components may be used in combination.

In one embodiment, the component (C) preferably contains 50 to 100 parts by mass of a glycoluril compound based on 100 parts by mass of the component (C) from the viewpoint of maintaining shear strength of the resin composition after curing. The content of the glycoluril compound in the component (C) is more preferably 60 to 100 parts by mass, and still more preferably 70 to 100 parts by mass.

In another embodiment, as the component (C), a polyfunctional thiol resin having an ester bond in the molecule can also be used. From the viewpoint that flexibility can be imparted to the cured product by an ester bond, the content of the polyfunctional thiol resin is preferably 50 to 100 parts by mass based on 100 parts by mass of the component (C). In still another embodiment, from the viewpoint of imparting flexibility to the cured product and moisture resistance, the content of the polyfunctional thiol resin having an ester bond in the molecule is preferably less than 50 parts by mass, more preferably less than 40 parts by mass, and still more preferably less than 30 parts by mass based on 100 parts by mass of the component (C).

Examples of the polyfunctional thiol resin having an ester bond in the molecule include pentaerythritol tetrakis(3-mercaptopropionate), trimethylolpropane tris(3-mercaptopropionate), dipentaerythritol hexakis(3-mercaptopropionate), pentaerythritol tetrakis(3-mercaptobutyrate), tris-[(3-mercaptopropionyloxy)-ethyl]-isocyanurate, pentaerythritol tetrakis(3-mercaptobutyrate), 1,4-bis(3-mercaptobutyryloxy) butane, 1,3,5-tris(3-mercaptobutyryloxyethyl)-1,3,5-triazine-2,4,6(1H,3H,5H)-trione, trimethylolpropane tris(3-mercaptobutyrate), and trimethylolethanetris(3-mercaptobutyrate).

### (Component (D))

The component (D) is a radical polymerization initiator. Since the resin composition of the present embodiment contains the radical polymerization initiator as the component (D), the resin composition can be cured by short-time heating or UV irradiation. The radical polymerization initiator as the component (D) may be a thermal radical polymerization initiator alone, a photoradical polymerization initiator alone, or a combination of these two types. The radical polymerization initiator as the component (D) is more preferably the photoradical polymerization initiator.

The radical polymerization initiator that can be used in the resin composition of the present embodiment is not particularly limited, and a known material can be used. Specific examples of the radical polymerization initiator include: dialkyl peroxide such as dicumyl peroxide, t-butylcumyl peroxide, 1,3-bis(2-t-butylperoxyisopropyl)benzene, or 2,5-dimethyl-2,5-bis(t-butylperoxy)hexane; peroxy ketals such as 1,1-bis(t-butylperoxy)cyclohexane, 1,1-bis(t-butylperoxy)-3,3,5-trimethylcyclohexane, 1,1-bis(t-amylperoxy)cyclohexane, 2,2-bis(t-butylperoxy)butane, n-butyl-4,4-bis(t-butylperoxy)valerate, or ethyl 3,3-(t-butylperoxy)butyrate; and alkyl peroxy esters such as t-butylperoxy-2-ethylhexanoate, 1, 1,3,3-tetramethylbutylperoxy-2-ethylhexanoate, t-butylperoxyisobutyrate, t-butyl peroxymaleate, or t-butyl peroxybenzoate. In addition, other examples includes 1-hydroxycyclohexyl phenyl ketone, 2-hydroxy-2-methyl-1-phenyl-propane-1-one, diethoxyacetophenone, 1-(4-isopropylphenyl)-2-hydroxy-2-methyl propane-1-one, 1-(4-dodecylphenyl)-2-hydroxy-2-methyl propane-1-one, 4-(2-hydroxyethoxy)-phenyl(2-hydroxy-2-propyl)ketone, 2-methyl-1-[4-(methylthio)phenyl]-2-morpholinopropane-1-one, benzoin, benzoin methyl ether, benzoin ethyl ether, benzoin isopropyl ether, benzoin n-butyl ether, benzoin phenyl ether, benzyl dimethyl ketal, benzophenone, benzoyl benzoic acid, methyl benzoyl benzoate, 4-phenyl benzophenone, hydroxybenzophenone, acrylated benzophenone, 4-benzoyl-4'-methyldiphenylsulfide, 3,3'-dimethyl-4-methoxybenzophenone, thioxanthone, 2-chlorthioxanthone, 2-methylthioxanthone, 2,4-dimethylthioxanthone, isopropylthioxanthone, 2,4-dichlorothioxanthone, 2,4-diethylthioxanthone, 2,4-diisopropylthioxanthone, 2,4,6-trimethylbenzoyldiphenylphosphine oxide, methylphenylglyoxylate, benzyl, camphorquinone, and 2-dimethylamino-2-(4-methylbenzyl)-1-(4-morpholine-4-yl-phenyl)-butane-1-one. As the radical polymerization initiator, a single substance may be used, or two or more substances may be used in combination.

The content of the radical polymerization initiator as the component (D) is not particularly limited. For example, the radical polymerization initiator as the component (D) is contained in the resin composition at a ratio of preferably 0.01 to 20 mass%, more preferably 0.03 to 10 mass%, and still more preferably 0.05 to 5 mass%. In particular, in the resin composition of the present embodiment, good curability was confirmed even when the content ratio of the component (D) in the resin composition was 2 mass% or less.

### (Component (E))

The component (E) is an anionic polymerization initiator. The resin composition of the present embodiment further contains the anionic polymerization initiator as the component (E) in addition to the radical polymerization initiator as the component (D). Such an anionic polymerization initiator is a polymerization initiator that initiates polymerization at the time of heating, and is effectively used at the time of main curing after temporary fixing, for example, when the resin composition is used as an adhesive for electronic component.

The anionic polymerization initiator that can be used in the resin composition of the present embodiment is not particularly limited, and a known material can be used. Specific examples of the anionic polymerization initiator include an imidazole compound that is solid at normal temperature, a solid dispersion-type amine adduct-based latent curing accelerator, for example, a reaction product of an amine compound and an epoxy compound (amine-epoxy adduct-based), a reaction product of an amine compound and an isocyanate compound or a urea compound (urea-type adduct-based), and the like. Examples of the imidazole compound that can be used in the present invention and is solid at normal temperature include 2-heptadecylimidazole, 2-phenyl-4,5-dihydroxymethylimidazole, 2-undecylimidazole, 2-phenyl-4 methyl-5-hydroxymethylimidazole, 2-phenyl-4-benzyl-5-hydroxymethylimidazole, 2,4-diamino-6-(2-methylimidazolyl-(1))-ethyl-S-triazine, 2,4-diamino-6-(2'-methylimidazolyl-(1)')-ethyl-S-triazine isocyanurate adduct, 2-methylimidazole, 2-phenylimidazole, 2-phenyl-4-methylimidazole, 1-cyanoethyl-2-phenylimidazole, 1-cyanoethyl-2-methylimidazole-trimellitate, 1-cyanoethyl-2-phenylimidazole-trimellitate, N-(2-methylimidazolyl-1-ethyl)-urea, N,N'-(2-methylimidazolyl-(1)-ethyl)-adipoyldiamide, and the like, but are not limited thereto.

Examples of the epoxy compound to be used as one of raw materials for producing the solid dispersion-type amine adduct-based latent curing accelerator (amine-epoxy adduct-based) that can be used in the present invention include: polyglycidyl ether obtained by reacting polyhydric phenols such as bisphenol A, bisphenol F, catechol, and resorcinol, or polyhydric alcohols such as glycerin and polyethylene glycol with epichlorohydrin; glycidyl ether ester obtained by reacting a hydroxycarboxylic acid such as p-hydroxybenzoic acid or β-hydroxynaphthoic acid with epichlorohydrin; polyglycidyl ester obtained by reacting polycarboxylic acid such as phthalic acid or terephthalic acid with epichlorohydrin; glycidylamine compound obtained by reacting 4,4'-diaminodiphenylmethane, m-aminophenol, or the like with epichlorohydrin; furthermore, a polyfunctional epoxy compound such as an epoxidized phenol novolak resin, an epoxidized cresol novolak resin, or an epoxidized polyolefin, or a monofunctional epoxy compound such as butyl glycidyl ether, phenyl glycidyl ether, or glycidyl methacrylate; and the like, but are not limited thereto.

The amine compound to be used as another raw material for producing the solid dispersion-type amine adduct-based latent curing accelerator only needs to be an amine compound having one or more active hydrogens capable of undergoing an addition reaction with an epoxy group in the molecule and having at least one or more functional groups selected from a primary amino group, a secondary amino group, and a tertiary amino group in the molecule. Examples of such amine compounds are shown below, but are not limited thereto. That is, examples of the amine compounds include: aliphatic amines such as diethylenetriamine, triethylenetetramine, n-propylamine, 2-hydroxyethylaminopropylamine, cyclohexylamine, and 4,4'-diaminodicyclohexylmethane; aromatic amine compounds such as 4,4'-diaminodiphenylmethane and 2-methylaniline; nitrogen atom-containing heterocyclic compounds such as 2-ethyl-4-methylimidazole, 2-ethyl-4-methylimidazoline, 2,4-dimethylimidazoline, piperidine, and piperazine; and the like.

Further, among these compounds, in particular, a compound having a tertiary amino group in the molecule is a raw material that gives a latent curing accelerator having excellent curing acceleration ability, and examples of such a compound include: primary or secondary amines having a tertiary amino group in the molecule, such as amine compounds such as dimethylaminopropylamine, diethylaminopropylamine, di-n-propylaminopropylamine, dibutylaminopropylamine, dimethylaminoethylamine, diethylaminoethylamine, and N-methylpiperazine, and imidazole compounds such as 2-methylimidazole, 2-ethylimidazole, 2-ethyl-4-methylimidazole, and 2-phenylimidazole; alcohols, phenols, thiols, carboxylic acids, and hydrazides having a tertiary amino group in the molecule, such as 2-dimethylaminoethanol, 1-methyl-2-dimethylaminoethanol, 1-phenoxymethyl-2-dimethylaminoethanol, 2-diethylaminoethanol, 1-butoxymethyl-2-dimethylaminoethanol, 1-(2-hydroxy-3-phenoxypropyl)-2-methylimidazole, 1-(2-hydroxy-3-phenoxypropyl)-2-ethyl-4-methylimidazole, 1-(2-hydroxy-3-butoxypropyl)-2-methylimidazole, 1-(2-hydroxy-3-butoxypropyl)-2-ethyl-4-methylimidazole, 1-(2-hydroxy-3-phenoxypropyl)-2-phenylimidazoline, 1-(2-hydroxy-3-butoxypropyl)-2-methylimidazoline, 2-(dimethylaminomethyl)phenol, 2,4,6-tris(dimethylaminomethyl)phenol, N-β-hydroxyethylmorpholine, 2-dimethylaminoethanethiol, 2-mercaptoethiol, 2-benzimidazole, 2-mercaptobenzimidazole, 2-mercaptobenzothiazole, 4-mercaptopyridine, N,N-dimethylaminobenzoic acid, N,N-dimethylglycine, nicotinic acid, isonicotinic acid, picolinic acid, N,N-dimethylglycine hydrazide, N,N-dimethylpropionic acid hydrazide, nicotinic acid hydrazide, and isonicotinic acid hydrazide; and the like.

Examples of the isocyanate compound to be used as still another raw material for producing the solid dispersion-type amine adduct-based latent curing accelerator include: monofunctional isocyanate compounds such as n-butyl isocyanate, isopropyl isocyanate, phenyl isocyanate, and benzyl isocyanate; polyfunctional isocyanate compounds such as hexamethylene diisocyanate, toluylene diisocyanate, 1,5-naphthalene diisocyanate, diphenylmethane-4,4'-diisocyanate, isophorone diisocyanate, xylylene diisocyanate, paraphenylene diisocyanate, 1,3,6-hexamethylene triisocyanate, and bicycloheptane triisocyanate; furthermore, a terminal isocyanate group-containing compound obtained by reaction of these polyfunctional isocyanate compounds with an active hydrogen compound; and the like. Examples of such a terminal isocyanate group-containing compound include an addition compound having a terminal isocyanate group obtained by reaction of toluylene diisocyanate and trimethylolpropane, an addition compound having a terminal isocyanate group obtained by reaction of toluylene diisocyanate and pentaerythritol, and the like, but are not limited thereto.

Further, examples of the urea compound include urea, thiourea, and the like, but are not limited thereto.

The solid dispersion-type latent curing accelerator that can be used in the present invention can be obtained, for example, by the following method. First, components are selected and mixed in combination of the above (a) two components of the amine compound and the epoxy compound, (b) three components of the two components and the active hydrogen compound, or (c) two components or three components of the amine compound and at least one compound of the isocyanate compound and the urea compound. Then, the obtained mixture is reacted at a temperature of room temperature to 200°C. Thereafter, the obtained reaction product is cooled and solidified, and then pulverized, or reacted in a solvent such as methyl ethyl ketone, dioxane, or tetrahydrofuran, desolvated and then the solid content is pulverized, so that the solid dispersion-type latent curing accelerator can be easily obtained.

Typical examples commercially available as the solid dispersion-type latent curing accelerator are shown below, but are not limited thereto. That is, examples of the amine-epoxy adduct-based (amine adduct-based) include "Amicure PN-23" (product name, manufactured by Ajinomoto Co., Inc.), "Amicure PN-40" (product name, manufactured by Ajinomoto Co., Inc.), "Amicure PN-50" (product name, manufactured by Ajinomoto Co., Inc.), "Hardener X-3661S" (product name, manufactured by ACR), "Hardener X-3670S" (product name, manufactured by ACR), "Novacure HX-3742" (product name, manufactured by Asahi Kasei Corporation), "Novacure HX-3721" (product name, manufactured by Asahi Kasei Corporation), and "Novacure HXA9322HP" (product name, manufactured by Asahi Kasei Corporation), and examples of the urea-type adduct-based include "Fujicure FXE-1000" (product name, manufactured by T&K TOKA Corporation) and "Fujicure FXR-1030" (product name, manufactured by T & K TOKA Corporation). As the anionic polymerization initiator, a single substance may be used, or two or more substances may be used in combination.

The content of the anionic polymerization initiator as the component (E) is not particularly limited. For example, the anionic polymerization initiator as the component (E) is contained in the resin composition in an amount of preferably 0.5 to 10 mass%, more preferably 1 to 5 mass%, and still more preferably 1 to 3 mass%.

### (Component (F))

The component (F) is a polymerization inhibitor. The polymerization inhibitor as the component (F) is added in order to enhance the stability of the resin composition during storage. Examples of the polymerization inhibitor include a radical polymerization inhibitor. The radical polymerization inhibitor as the component (F) is added in order to suppress progress of an unintended radical polymerization reaction. The methacrylate compound as the component (A) and the polyfunctional acrylate compound as the component (B) may generate radicals from themselves with low probability. At this time, the unintended radical polymerization reaction may proceed with the radicals as base points. By adding the radical polymerization inhibitor, the progress of such unintended radical polymerization reaction of the component (A) and the component (B) can be suppressed.

As the polymerization inhibitor as the component (F), a known polymerization inhibitor can be used. The component (F) to be used is preferably, for example, at least one selected from the group consisting of N-nitroso-N-phenylhydroxylamine aluminum, triphenylphosphine, p-methoxyphenol, and hydroquinone. Further, as the component (F), known radical polymerization inhibitors disclosed in JP-A-2010-117545, JP-A-2008-184514, and the like can also be used. As the component (F), a single component may be used, or two or more components may be used in combination.

### (Component (G))

The component (G) is a filler. By containing the filler as the component (G), it is possible to improve the moisture resistance and liquid drainability at the time of jet dispensing. The content of the filler is not particularly limited, but for example, the filler as the component (G) is contained in the resin composition of the present embodiment in an amount of preferably 0 to 65 mass%, more preferably 5 to 50 mass%, and still more preferably 10 to 30 mass%.

As the filler as the component (G), a known filler can be used. Examples of the component (G) include inorganic fillers and organic fillers. Examples of the inorganic filler include glass, silica, alumina, aluminum nitride, boron nitride, titanium oxide, calcium carbonate, talc, and silver filler. Examples of the organic filler include silicone rubber, PTFE, polystyrene, polyacrylate, polyurethane, and polydivinylbenzene filler. An average particle diameter of the filler is preferably 0.1 to 10 µm, more preferably 0.3 to 5 µm, and still more preferably 0.5 to 5 µm.

### (Component (H))

The component (H) is a black pigment. The black pigment as the component (H) is a particularly effective component when the resin composition of the present embodiment is used as an adhesive required to have a light shielding property, such as an adhesive for a camera module. For example, when the resin composition is used as the adhesive for the camera module, light may enter the camera module from a portion to which the resin composition is applied. Therefore, it is preferable to contain the black pigment as the component (H) in order to provide the light shielding property to prevent the light from entering the camera module.

As the black pigment as the component (H), a known black pigment can be used. Examples of the component (H) to be used include carbon black, graphite, titanium nitride, titanium oxide, zirconia, and titanium black.

### (Component (I); Anionic polymerization inhibitor)

The resin composition of the present embodiment may contain an anionic polymerization inhibitor (I) (hereinafter, also referred to as a "component (I)") as long as effects of the present invention are not impaired. The anionic polymerization inhibitor (I) is for enhancing the stability of the resin composition during storage, and is added to suppress occurrence of an unintended polymerization reaction due to a basic component.

As the anionic polymerization inhibitor (I), a known anionic polymerization inhibitor can be used, and for example, a boric acid ester compound or a strong acid can be used. Specific examples of the anionic polymerization inhibitor (I) include trimethylborate, triethylborate, tri-n-propylborate, triisopropylborate, trifluoromethane sulfonic acid, maleic acid, methane sulfonic acid, barbituric acid, difluoroacetic acid, trichloroacetic acid, phosphoric acid, and dichloroacetic acid. Among them, a preferred anionic polymerization inhibitor (I) is at least one selected from tri-n-propylborate, triisopropylborate, and barbituric acid. Further, as the anionic polymerization inhibitor (I), a known anionic polymerization inhibitor disclosed in JP-A-2010-117545, JP-A-2008-184514, JP-A-2017-171804, or the like can also be used. As the anionic polymerization inhibitor (I), any one may be used, or two or more may be used in combination.

The content of the component (I) is preferably 0.1 to 10 mass%, and more preferably 0.3 to 7 mass% based on a total mass of the resin composition.

### (Other compounding agents)

The resin composition of the present embodiment may further contain components other than the components (A) to (I) described above as necessary. Specific examples of such a component to be blended include an antifoaming agent, a silane coupling agent, a dispersant, a thixotropic agent, and an epoxy resin. The kind and blending amount of each compounding agent are as usual.

### (Characteristics of resin composition)

The resin composition of the present embodiment preferably has, for example, the following characteristics. The viscosity of the resin composition of the present embodiment has a viscosity of preferably 0.2 to 80 Pa s, more preferably 1 to 60 Pa s, still more preferably 1 to 50 Pa·s, and particularly preferably 1 to 20 Pa·s. With such a configuration, handleability as a product is good, and the workability can be kept good and high. The viscosity of the resin composition can be measured at room temperature (25°C) and a rotation speed of 50 rpm using, for example, a (B type) viscometer manufactured by Brookfield.

Thixotropic index (TI) of the resin composition of the present embodiment is preferably 0.7 to 7, more preferably 0.9 to 6.5, and still more preferably 1 to 6.5 at room temperature (25°C). The thixotropic index of the resin composition can be obtained by dividing a value measured at room temperature (25°C) and a rotation speed of 5 rpm by using, for example, the (B type) viscometer manufactured by Brookfield by a value measured at a rotation speed of 50 rpm.

### (Method for producing resin composition)

The resin composition of the present embodiment can be produced by a conventional method. The resin composition of the present embodiment can be produced by mixing the respective components described above using, for example, a grinding machine, a pot mill, a three-roll mill, a rotary mixer, a biaxial mixer, or the like.

### (Uses of resin composition)

The resin composition of the present embodiment can be used as the adhesive for electronic component. In addition, the resin composition of the present embodiment can also be suitably applied to engineering plastics. When the resin composition of the present embodiment is used as the adhesive for electronic component, the electronic component to be bonded is not particularly limited, and examples thereof include a ceramic substrate, an organic substrate, and a semiconductor chip. In particular, when used as the adhesive, it is useful for bonding a small electronic component. The resin composition is used in a step of applying the adhesive for electronic component by the jet dispenser 50 as illustrated in Fig. 1.

The resin composition of the present embodiment can be effectively used, for example, as the adhesive for the camera module. That is, it can be used for bonding the members constituting the camera module, and can be mainly used for fixing the members using UV Fixing between the members can be used for the temporary fixing in the active alignment step or final fixing for finally fixing the camera module. The resin composition of the present embodiment can satisfy requirement of fluidity required when fixing the camera module.

Note that the jet dispenser 50 as illustrated in Fig. 1 can perform several hundred shots of jet dispensing per second by the reciprocating motion of the needle 52. Therefore, a large impact is applied to the resin composition 20 for jet dispensing (for example, the adhesive). Even after such a large impact is applied, the resin composition (the resin composition 20) of the present embodiment can maintain fluidity.

The jet dispensing is used to supply an adhesive for fixing the member of the camera module. In recent years, along with downsizing of the camera module, there is an increasing demand for supplying the adhesive to a minute region or a narrow gap more than before. Specifically, a width of the minute region or the gap to which the adhesive is supplied is several hundred µm (for example, 300 µm). When the resin composition of the present embodiment is jet dispensed, the adhesive can be supplied to a region or a gap having a small dimension.

### (2) Adhesive for electronic component:

Next, an embodiment of the adhesive for electronic component of the present invention will be described. The adhesive for electronic component of the present embodiment is the adhesive for electronic component using the resin composition of the present embodiment described above.

### (3) Cured product of resin composition and cured product of adhesive for electronic component:

Next, an embodiment of the cured product of the present invention will be described. The cured product of the embodiment is a cured product formed of the resin composition of the present embodiment described above. Further, the cured product of the embodiment may be a cured product formed of the adhesive for electronic component using the resin composition of the present embodiment described above.

### (4) Electronic component:

Since the electronic component of the present invention contains the cured product formed of the above-described resin composition or the cured product formed of the adhesive for electronic component using the resin composition, productivity is high. In addition, reliability is high.

### EXAMPLES

Hereinafter, the present invention will be described more specifically with reference to Examples, but the present invention is not limited by these Examples at all. In the following Examples, parts and % respectively represent parts by mass and mass%, unless otherwise specified.

### (Examples 1 to 23, Comparative Example 1)

### [Sample preparation]

After components shown in Tables 1 to 4 were weighed and blended, they were mixed to prepare resin compositions of Examples and Comparative Examples. Specifically, the components shown in Tables 1 to 4 were dispersed in three-roll mills and pasted to prepare resin compositions. Details of the components shown in Tables 1 to 4 are as follows.

### [Component (A); methacrylate compound]

(A1): phenoxyethyl methacrylate (product name: Light Ester PO, methacrylate equivalent: 206 g/eq, the number of methacryloyl groups in one molecule: 1) manufactured by Kyoeisha Chemical Co., Ltd.
(A2): bisphenol A-EO 2.6 mol adduct - dimethacrylate (product name: Light Ester BP-2EMK, methacrylate equivalent: 181 g/eq, the number of methacryloyl groups in one molecule: 2) manufactured by Kyoeisha Chemical Co., Ltd.
(A3): neopentyl glycol dimethacrylate (product name: Light Ester NP, methacrylate equivalent: 120 g/eq, the number of methacryloyl groups in one molecule: 2) manufactured by Kyoeisha Chemical Co., Ltd.
(A4): 2-hydroxy-1,3-dimethacryloxypropane (product name: NK Ester 701, methacrylate equivalent: 114 g/eq, the number of methacryloyl groups in one molecule: 2) manufactured by Shin-Nakamura Chemical Co., Ltd.
(A5): trimethylolpropane trimethacrylate (product name: NK Ester TMPT, methacrylate equivalent: 112.8 g/eq, the number of methacryloyl groups in one molecule: 3) manufactured by Shin-Nakamura Chemical Co., Ltd.
(A6): ditrimethylolpropane tetramethacrylate (product name: NK Ester D-TMP, methacrylate equivalent: 129.5 g/eq, the number of methacryloyl groups in one molecule: 4) manufactured by Shin-Nakamura Chemical Co., Ltd.

### [Component (B); polyfunctional acrylate compound]

(B 1): polyester acrylate (polyfunctional acrylic compound) (product name: M7100, acrylate equivalent: 188 g/eq, the number of acryloyl groups in one molecule: 3 or more) manufactured by Toagosei Co., Ltd.
(B2): dimethylol-tricyclodecane diacrylate (product name: Light Acrylate DCP-A, acrylate equivalent: 152 g/eq, the number of acryloyl groups in one molecule: 2) manufactured by Kyoeisha Chemical Co., Ltd.
(B3): neopentyl glycol diacrylate, (product name: Light Acrylate NP-A, acrylate equivalent: 106 g/eq, the number of acryloyl groups in one molecule: 2) manufactured by Kyoeisha Chemical Co., Ltd.

### [Component (C); polyfunctional thiol compound]

(C1): 1,3,4,6-tetrakis(2-mercaptoethyl) glycoluril (product name: TS-G, thiol equivalent: 94 g/eq, the number of thiol groups in one molecule: 4) manufactured by Shikoku Chemicals Corporation
(C2): tetrahydro-1,3,4,6-tetrakis(3-mercaptopropyl)-imidazo[4,5-d]imidazole-2,5(1H,3H)-dione (product name: C3TS-G, thiol equivalent: 110 g/eq, the number of thiol groups in one molecule: 4) manufactured by Shikoku Chemicals Corporation
(C3): pentaerythritol tetrakis(3-mercaptopropionate) (product name: PEMP-LV, thiol equivalent: 122 g/eq, the number of thiol groups in one molecule: 4) manufactured by SC Organic Chemical Co., Ltd.
(C4): 3-(3-mercapto-propoxy)-2,2-bis-(3-mercapto-propoxymethyl)-propan-1-ol (product name: Multhiol Y-3, thiol equivalent: 124 g/eq, the number of thiol groups in one molecule: 3) manufactured by SC Organic Chemical Co., Ltd.

### [Component (D); radical polymerization initiator]

(D1): 1,1,3,3-tetramethylbutylperoxy-2-ethylhexanoate (product name: PEROCTA O, thermal radical polymerization initiator) manufactured by NOF CORPORATION
(D2): 1-hydroxycyclohexyl-phenyl ketone (product name: OMNIRAD 184, photoradical polymerization initiator) manufactured by IGM Resins B.V.
(D3): 2-methyl-1-[4-(methylthio)phenyl]-2-morpholinopropane-1-one (product name: OMNIRAD 907, photoradical polymerization initiator) manufactured by IGM Resins B.V.

### [Component (E); anionic polymerization initiator]

(E1): amine-based curing agent (product name: HXA9322HP) which is a mixture of microencapsulated amine-based curing agent and bisphenol A type and F type epoxy resins and in which 33 mass% is microencapsulated, manufactured by Asahi Kasei Corporation
(E2): modified alicyclic polyamine (product name: FXR -1121) manufactured by T&K TOKA Corporation

### [Component (F); polymerization inhibitor]

(F1): N-nitroso-N-phenylhydroxylamine aluminum (product name: Q-1301) manufactured by FUJIFILM Wako Pure Chemical Corporation
(F2): 4-tert-butylpyrocatechol (product name: t-butylcatechol) manufactured by FUJIFILM Wako Pure Chemical Corporation

### [Component (G); filler]

(G1): spherical silica (product name: SE5200 SEE) manufactured by Admatechs Company Limited
(G2): spherical silica (product name: SE2200 SEE) manufactured by Admatechs Company Limited
(G3): silicone composite powder (product name: KMP-600T) manufactured by Shin-Etsu Chemical Co., Ltd.
(G4): fumed silica (product name: TS-720) manufactured by Cabot Corporation

### [Component (H); black pigment]

(H1): carbon black (product name: Black 4) manufactured by Evonik Degussa Japan Co., Ltd
(H2): titanium nitride, titanium dioxide (product name: titanium black 13M) manufactured by Mitsubishi Materials Electronic Chemicals Co., Ltd.

### [Component (J); other components]

(J): silane coupling agent (product name: KBM403; 3-glycidoxypropyltrimethoxysilane) manufactured by Shin-Etsu Chemical Co., Ltd.

Further, for the resin compositions of Examples 1 to 23 and Comparative Example 1, the total number of methacryloyl groups in the component (A), the total number of acryloyl groups in the component (B), and the total number of thiol groups in the component (C) were determined, and a ratio (1) and a ratio (2) of functional groups related to each component were determined. Here, the ratio (1) of functional groups is a ratio of the total number of methacryloyl groups in the component (A) to the total number of acryloyl groups in the component (B) (that is, the total number of methacryloyl groups in the component (A)/the total number of acryloyl groups in the component (B)). The ratio (2) of functional groups is a ratio of the total number of methacryloyl groups in the component (A) and the total number of acryloyl groups in the component (B) to the total number of thiol groups in the component (C) (that is, {the total number of methacryloyl groups in the component (A) + the total number of acryloyl groups in the component (B)}/the total number of thiol groups in the component (C)). Results of the ratio (1) and the ratio (2) of functional groups for each component are shown in Tables 1 to 4.

**[Table 1]**

| | | Equivalent | Example 1 | Example 2 | Example 3 | Example 4 | Example 5 | Example 6 |
|---|---|---|---|---|---|---|---|---|
| Component (A) | (A1) | 206 | - | - | - | - | - | - |
| | (A2) | 181 | 10.8 | - | - | - | - | - |
| | (A3) | 120 | - | 11.3 | 11.30 | 12.66 | - | - |
| | (A4) | 114 | - | - | - | - | 10.78 | - |
| | (A5) | 112.8 | - | - | - | - | - | 11.41 |
| | (A6) | 129.5 | - | - | - | - | - | - |
| Component (B) | (B1) | 188 | - | - | - | - | - | - |
| | (B2) | 152 | 34.53 | 28.34 | 28.34 | - | 28.55 | 28.63 |
| | (B3) | 106 | - | - | - | 22.44 | - | - |
| Component (C) | (C1) | 94 | - | - | - | - | - | - |
| | (C2) | 110 | 34.52 | 34.21 | 34.21 | 38.55 | 34.46 | 34.62 |
| | (C3) | 122 | - | - | - | - | - | - |
| | (C4) | 124 | - | - | - | - | - | - |
| Component (D) | (D1) | | 0.10 | 0.10 | 0.10 | 0.10 | 0.10 | 0.10 |
| | (D2) | | 1.28 | 1.27 | 1.27 | 1.29 | 1.28 | 1.28 |
| | (D3) | | - | - | - | - | - | - |
| Component (E) | (E1) | | 7.45 | 6.93 | 6.93 | 7.02 | 6.85 | 7.00 |
| | (E2) | | - | - | - | - | - | - |
| Component (F) | (F1) | | 0.33 | 0.28 | 0.28 | 0.26 | 0.28 | 0.28 |
| | (F2) | | - | - | - | - | - | - |
| Component (G) | (G1) | | - | - | - | - | - | - |
| | (G2) | | 10.15 | 10.84 | - | 10.70 | 10.92 | 10.16 |
| | (G3) | | - | - | - | - | - | - |
| | (G4) | | - | 5.97 | - | 6.10 | 6.01 | 6.03 |
| Component (H) | (H1) | | - | - | - | - | - | - |
| | (H2) | | - | - | - | - | - | - |
| Component (J) | | | 0.68 | 0.60 | - | 0.69 | 0.60 | 0.71 |
| Ratio (1)*1 of functional groups | | | 0.2 | 0.5 | 0.5 | 0.5 | 0.5 | 0.5 |
| Ratio (2)*2 of functional groups | | | 0.9 | 0.9 | 0.9 | 0.9 | 0.9 | 0.9 |
| Evaluation of curability | | | A | A | A | B | A | A |
| Evaluation of jet dispensing property | | | C | B | B | B | C | B |
| *** 1: Ratio (1) of functional groups= total number of methacryloyl groups in component (A)/total number of acryloyl groups in component (B)** | | | | | | | | |
| ***2: Ratio (2) of functional groups = {total number of methacryloyl groups in component (A) + total number of acryloyl groups in component (C)}/total number of thiol groups in component (C)** | | | | | | | | |

**[Table 2]**

| | | Equivalent | Example 7 | Example 8 | Example 9 | Example 10 | Example 11 | Example 12 |
|---|---|---|---|---|---|---|---|---|
| Component (A) | (A1) | 206 | - | 19.00 | - | - | - | - |
| | (A2) | 181 | - | - | - | 7.98 | - | - |
| | (A3) | 120 | - | - | 24.44 | - | 11.27 | 11.27 |
| | (A4) | 114 | - | - | 11.71 | - | - | - |
| | (A5) | 112.8 | - | - | - | - | - | - |
| | (A6) | 129.5 | 12.08 | - | - | - | - | - |
| Component (B) | (B1) | 188 | - | - | - | - | - | - |
| | (B2) | 152 | 29.93 | 28.00 | - | 25.50 | 28.34 | 28.34 |
| | (B3) | 106 | - | - | - | - | - | - |
| Component (C) | (C1) | 94 | - | - | - | - | - | - |
| | (C2) | 110 | 33.97 | 33.97 | 37.43 | 20.19 | 34.21 | 34.13 |
| | (C3) | 122 | - | - | - | - | - | - |
| | (C4) | 124 | - | - | - | - | - | - |
| Component (D) | (D1) | | 0.10 | 0.10 | 0.11 | 0.07 | 0.10 | 0.10 |
| | (D2) | | 1.26 | 1.26 | 1.39 | 0.94 | 1.27 | 1.26 |
| | (D3) | | - | - | - | - | - | - |
| Component (E) | (E1) | | 6.88 | 7.50 | 6.95 | 5.67 | 6.91 | 6.92 |
| | (E2) | | - | - | - | - | - | - |
| Component (F) | (F1) | | 0.30 | 0.30 | 0.26 | 0.24 | 0.28 | 0.28 |
| | (F2) | | - | - | - | - | - | - |
| Component (G) | (G1) | | - | - | - | - | - | - |
| | (G2) | | 10.77 | 10.77 | 10.81 | 31.49 | 10.82 | 10.82 |
| | (G3) | | - | - | - | - | - | - |
| | (G4) | | 6.38 | 6.38 | 6.08 | - | 5.96 | 5.96 |
| Component (H) | (H1) | | - | - | - | - | 0.17 | - |
| | (H2) | | - | - | - | - | - | 0.17 |
| Component (J) | | | 0.59 | 0.59 | 0.65 | 0.67 | 0.60 | 0.60 |
| Ratio (1)* 1 of functional groups | | | 0.5 | 0.5 | - | 0.2 | 0.5 | 0.5 |
| Ratio (2)*2 of functional groups | | | 0.9 | 0.9 | 0.9 | 0.9 | 0.9 | 0.9 |
| Evaluation of curability | | | A | B | B | B | A | B |
| Evaluation of jet dispensing property | | | C | A | A | B | B | A |
| ***1: Ratio (1) of functional groups = total number of methacryloyl groups in component (A)/total number of acryloyl groups in component (B)** | | | | | | | | |
| ***2: Ratio (2) of functional groups = {total number of methacryloyl groups in component (A) + total number of acryloyl groups in component (C)}/total number of thiol groups in component (C)** | | | | | | | | |

**[Table 3]**

| | | Equivalent | Example 13 | Example 14 | Example 15 | Example 16 | Example 17 | Example 18 |
|---|---|---|---|---|---|---|---|---|
| Component (A) | (A1) | 206 | - | - | - | - | - | - |
| | (A2) | 181 | 7.98 | 7.98 | 7.98 | - | - | - |
| | (A3) | 120 | - | - | - | 11.30 | 11.30 | 11.3 |
| | (A4) | 114 | - | - | - | - | - | - |
| | (A5) | 112.8 | - | - | - | - | - | - |
| | (A6) | 129.5 | - | - | - | - | - | - |
| Component (B) | (B1) | 188 | 0.55 | 0.55 | 0.55 | - | - | - |
| | (B2) | 152 | 25.50 | 25.50 | 25.50 | 28.34 | 28.34 | 28.34 |
| | (B3) | 106 | - | - | - | - | - | - |
| Component (C) | (C1) | 94 | - | - | - | - | - | - |
| | (C2) | 110 | 20.19 | 20.19 | 20.19 | 34.21 | 34.21 | 34.21 |
| | (C3) | 122 | - | - | - | - | - | - |
| | (C4) | 124 | 6.43 | 6.43 | 6.43 | - | - | - |
| Component (D) | (D1) | | 0.07 | 0.07 | 0.07 | - | 0.10 | 0.10 |
| | (D2) | | 0.94 | 0.94 | 0.94 | 1.27 | 1.27 | - |
| | (D3) | | - | - | - | - | - | - |
| Component (E) | (E1) | | 5.67 | 5.67 | 5.67 | 6.93 | - | 6.93 |
| | (E2) | | - | - | - | - | 2.18 | - |
| Component (F) | (F1) | | 0.24 | 0.24 | 0.24 | 0.28 | 0.28 | 0.28 |
| | (F2) | | - | - | - | - | - | - |
| Component (G) | (G1) | | - | - | - | - | - | - |
| | (G2) | | - | 31.49 | - | 10.84 | - | 10.84 |
| | (G3) | | 31.49 | - | - | - | - | - |
| | (G4) | | - | - | (5.3) | 5.97 | - | 5.97 |
| Component (H) | (H1) | | - | - | - | - | - | - |
| | (H2) | | 0.14 | 0.14 | 0.14 | - | - | - |
| Component (J) | | | 0.67 | 0.67 | 0.67 | 0.60 | - | 0.60 |
| Ratio (1)*1 of functional groups | | | 0.2 | 0.2 | 0.2 | 0.5 | 0.5 | 0.5 |
| Ratio (2)*2 of functional groups | | | 0.9 | 0.9 | 0.9 | 0.9 | 0.9 | 0.9 |
| Evaluation of curability | | | B | B | B | A | A | B |
| Evaluation of jet dispensing property | | | A | A | B | B | B | B |
| ***1: Ratio (1) of functional groups = total number of methacryloyl groups in component (A)/total number of acryloyl groups in component (B)** | | | | | | | | |
| ***2: Ratio (2) of functional groups = {total number of methacryloyl groups in component (A) + total number of acryloyl groups in component (C)}/total number of thiol groups in component (C)** | | | | | | | | |

**[Table 4]**

| | | Equivalent | Example 19 | Example 20 | Example 21 | Example 22 | Example 23 | Comparative Example 1 |
|---|---|---|---|---|---|---|---|---|
| Component (A) | (A1) | 206 | - | - | - | - | - | - |
| | (A2) | 181 | - | 7.79 | - | - | 35.56 | - |
| | (A3) | 120 | 11.30 | - | 11.30 | 13.56 | - | - |
| | (A4) | 114 | - | - | - | - | - | - |
| | (A5) | 112.8 | - | - | - | - | - | - |
| | (A6) | 129.5 | - | - | - | - | - | - |
| Component (B) | (B1) | 188 | - | 0.53 | - | - | 0.51 | 0.52 |
| | (B2) | 152 | 28.34 | 24.91 | 28.34 | 34.01 | - | 30.63 |
| | (B3) | 106 | - | - | - | - | - | - |
| Component (C) | (C1) | 94 | - | - | - | - | - | - |
| | (C2) | 110 | - | - | 3800 | 3800 | 18.90 | 19.24 |
| | (C3) | 122 | - | 28.33 | - | - | - | - |
| | (C4) | 124 | 38.50 | - | - | - | 5.90 | 6.13 |
| Component (D) | (D1) | | 0.10 | 0.07 | 0.10 | 0.10 | 0.07 | 0.07 |
| | (D2) | | 1.27 | 0.92 | 1.27 | 1.27 | 0.88 | - |
| | (D3) | | - | - | - | - | - | 0.90 |
| Component (E) | (E1) | | 6.93 | 5.54 | 6.93 | 6.93 | 5.61 | 5.40 |
| | (E2) | | - | - | - | - | - | - |
| Component (F) | (F1) | | 0.28 | 0.24 | 0.28 | 0.28 | 0.25 | 0.23 |
| | (F2) | | - | - | - | - | - | - |
| Component (G) | (G1) | | | | - - | - - | | 30.00 |
| | (G2) | | 10.84 | 30.76 | 10.84 | 10.84 | - | - |
| | (G3) | | - | - | - | - | 31.44 | - |
| | (G4) | | 5.97 | - | 5.97 | 5.97 | - | 6.00 |
| Component (H) | (H1) | | - | - | - | - | - | - |
| | (H2) | | - | 0.13 | - | - | 0.13 | 0.13 |
| Component (J) | | | 0.60 | 0.66 | 0.60 | 0.60 | 0.63 | 0.64 |
| Ratio (1)*1 of functional groups | | | 0.5 | 0.2 | 0.5 | 0.5 | 11.5 | 0 |
| Ratio (2)*2 of functional groups | | | 0.9 | 0.9 | 0.8 | 1.2 | 0.9 | 0.9 |
| Evaluation of curability | | | B | C | A | A | C | A |
| Evaluation of jet dispensing property | | | A | C | B | A | B | D |
| ***1: Ratio (1) of functional groups = total number of methacryloyl groups in component (A)/total number of acryloyl groups in component (B)** | | | | | | | | |
| ***2: Ratio (2) of functional groups = {total number of methacryloyl groups in component (A) + total number of acryloyl groups in component (C)}/total number of thiol groups in component (C)** | | | | | | | | |

For the resin compositions of Examples 1 to 23 and Comparative Example 1, the curability and the jet dispensing property were evaluated by the following methods. Results are shown in Tables 1 to 4.

### [Evaluation of curability]

The jet-dispensed resin composition was subjected to UV curing or thermal curing, and a depth of UV curing or a strength during thermal curing was measured.

### <Depth of UV curing>

Two heat-resistant tapes (thickness: 100 µm) were pasted at an interval of 10 mm on a black resin plate A (width: 50 mm × length: 25 mm × thickness: 1.5 mm). Next, the resin composition was applied between the two heat-resistant tapes on the resin plate A so as to have the same thickness as that of the heat-resistant tape, that is, 100 µm. Next, the two heat-resistant tapes and the resin composition were sandwiched between the resin plate A and the other resin plate B (width: 50 mm × length: 25 mm × thickness: 1.5 mm), and both ends of stacked two resin plates A and B were fastened with clips. The resin composition protruding from upper portions of the resin plates A and B was wiped off. The resin composition was irradiated with UV light from an upper portion of a jig thus prepared. More specifically, the UV curing was performed by UV irradiation at an integrated light amount of 2000 mJ/cm² using a UV LED irradiation device "AC475 (product name)" manufactured by Excelitas Technologies Corp. The integrated light amount was measured by connecting a light receiver "UVD-365 (product name)" of "UIT-250 (product name)" manufactured by Ushio Inc. One of the sandwiched resin plates A and B was peeled off, uncured portion attached to the cured product of the resin composition was removed, a distance of a cured portion from a UV irradiation surface was measured with a microscope, and the result was taken as the depth of UV curing.

### < Strength>

A ceramic chip of 2 mm × 3 mm was placed on each of resin compositions of Examples and Comparative Examples jet dispensed onto ceramic substrates. Next, the UV curing was performed by UV irradiation at the integrated light amount of 2000 mJ/cm² using the UV LED irradiation device "AC475 (product name)" manufactured by Excelitas Technologies Corp. The integrated light amount was measured by connecting a light receiver "UVD-365 (product name)" of "UIT-250 (product name)" manufactured by Ushio Inc. AUV-cured curable resin composition was thermally cured at 80°C for 60 minutes in a blower dryer. Using a universal bond tester "DAGE4000 (product name)" manufactured by Dage Corp., a load was applied to the ceramic chip, and a shear stress (N) when the ceramic chip was peeled off was measured. Such measurement was performed 10 times for one test piece, and an average value of 10 times was taken as a measured value of the shear strength. The higher the measured shear strength is, the better the curability by ultraviolet rays and/or heat is.

### <Evaluation criteria>

The cured product cured as described above was evaluated according to the following evaluation criteria. In the following evaluation criteria, evaluation of "A" is the best, and the evaluation is inferior in the order of "B", "C", and "D".

A: The depth of UV curing was 450 µm or more, or the strength during thermal curing was 130 N or more.

B: The depth of UV curing was more than 350 µm and less than 450 µm, or the strength during thermal curing was more than 60 N and less than 130 N.

C: The depth of UV curing was 350 µm or less, or the strength during thermal curing was 60 N or less.

### [Evaluation of jet dispensing property]

The resin compositions of Examples and Comparative Examples were continuously discharged using a jet dispenser (product name "Smart Stream (product name)" manufactured by ITW EAE), and the number of shots that could be continuously discharged was measured. In the following evaluation criteria, "continuously dischargeable" refers to a state in which the resin composition can be continuously discharged without falling into the following "unable to discharge" state. "Unable to discharge" refers to a state in which driving of the jet dispenser is stopped due to gelation reaction of the resin composition.

### <Evaluation criteria>

A: The number of shots that could be continuously discharged was 100,000 or more.
B: The number of shots that could be continuously discharged was 10,000 or more and less than 100,000.
C: The number of shots that could be continuously discharged was 500 or more and less than 10,000.
D: The number of shots that could be continuously discharged was less than 500.

### [Results]

As shown in Tables 1 to 4, the resin compositions of Examples 1 to 23 containing the methacrylate compound as the component (A) exhibited good results in evaluation of the curability and the jet dispensing property. Further, in the resin composition of Examples 1 to 23, curability when the content of the radical polymerization initiator as the component (C) was 2 mass% or less could be confirmed.

On the other hand, since the resin composition of Comparative Example 1 did not contain the methacrylate compound as the component (A), the number of shots that could be continuously discharged was less than 500 in the evaluation of the jet dispensing property. It has been found that the resin composition of Comparative Example 1 is more likely to be gelled in the jet dispenser than the resin compositions of Examples 1 to 23, and is not suitable for application by jet dispensing.

### INDUSTRIAL APPLICABILITY

The resin composition of the present invention can be used as a resin composition that can be applied by jet dispensing, and particularly can be effectively used as the adhesive, for example, the adhesive for electronic component. Further, the resin composition, the adhesive for electronic component, and cured products thereof of the present invention can be used for manufacturing the electronic component. Furthermore, the resin composition of the present embodiment can also be suitably used for the engineering plastics.

### LIST OF REFERENCE SIGNS

- 20: Resin composition
- 50: Jet dispenser
- 52: Needle
- 54: Seal (Sealing member)
- 56: Nozzle
- 58: Chamber
- 61: Sliding portion
- 62: Collision portion
- S: Stroke

## Claims

1. A resin composition comprising:
a methacrylate compound (A);
a polyfunctional thiol compound (C);
a radical polymerization initiator (D); and
an anionic polymerization initiator (E), wherein
the resin composition does not contain or contains a polyfunctional acrylate compound (B), and a ratio of a total number of methacryloyl groups in the methacrylate compound (A) to a total number of acryloyl groups in the polyfunctional acrylate compound (B) is (A):(B) = 10:0 to 2:8.

2. The resin composition according to claim 1, further comprising a polymerization inhibitor (F).

3. The resin composition according to claim 1 or 2, wherein a ratio of a total number of (meth)acryloyl groups in the methacrylate compound (A) and the polyfunctional acrylate compound (B) to a total number of thiol groups in the polyfunctional thiol compound (C) is 0.8 to 1.2.

4. The resin composition according to any one of claims 1 to 3, further comprising a filler (G).

5. The resin composition according to any one of claims 1 to 4, further comprising a black pigment (H).

6. An adhesive for electronic component using the resin composition according to any one of claims 1 to 5.

7. A cured product comprising the resin composition according to any one of claims 1 to 5 or the adhesive for electronic component according to claim 6.

8. An electronic component using the resin composition according to any one of claims 1 to 5 or the adhesive for electronic component according to claim 6.

9. An electronic component comprising the cured product according to claim 7.
